# EUROPEAN PATENT SPECIFICATION

(11) **EP 1 700 049 B1**
(45) Date of publication and mention of the grant of the patent: **08.07.2009**
(21) Application number: 03819237.3
(22) Date of filing: 30.12.2003
(51) Int. Cl.: F16D 65/097

(54) **SPRING ELEMENT FOR FIXING A BRAKE PAD IN A CALIPER OF A DISC BRAKE**
FEDERELEMENT ZUR BEFESTIGUNG EINES BREMSBELAGS IN EINEM SATTEL EINER SCHEIBENBREMSE
ELEMENT RESSORT POUR FIXER UNE PLAQUETTE DE FREIN DANS UN ETRIER DE FREIN A DISQUE

(43) Date of publication of application: 13.09.2006
(73) Proprietor: Freni Brembo S.p.A., 24035 Curno (Bergamo) (IT)
(72) Inventor: SCHORN, Michael, I-20050 Camparada, Milano (IT); TIRONI, Giovanni, Mario, I-24044 Dalmine, Bergamo (IT); ONGARETTI, Enrico, Battista, I-24064 Grumello del Monte, Bergamo (IT); SALA, Paolo, I-24030 Villa D'Adda, Bergamo (IT)
(74) Representative: Leihkauf, Steffen Falk
(86) International application number: PCT/IT2003/000873
(87) International publication number: WO 2005/064193

(56) References cited:
- US-A- 5 535 856
- US-B1- 6 269 915
- US-B1- 6 378 666
- PATENT ABSTRACTS OF JAPAN vol. 2000, no. 08, 6 October 2000 (2000-10-06) -& JP 2000 145835 A (AKEBONO BRAKE IND CO LTD), 26 May 2000 (2000-05-26)

## Description

The present invention relates to a spring element for fixing a brake pad in a caliper of a disc brake, and also to a disc brake.

Disc brakes are known in which the brake pads are substantially rectangular in shape, wherein the forward edge and the rearward edge of the pad respectively constitute opposing surfaces which, depending on whether braking takes place in forward motion or in reverse motion, abut against corresponding forward or rearward walls of a suitable seat of the caliper body.

Disc brakes are also known in which the brake pads are coupled to the caliper at or near their rearward side, seen in the direction of rotation of the brake disc, and are free to pivot, within certain limits, about the coupling point. During braking in forward motion, the brake pad, held at the coupling point, is principally stressed in tension, while during braking in reverse motion, it abuts against the coupling point and is consequently stressed in compression.

The brake pads and calipers of the prior art, while being advantageous from various points of view, are subject to annoying vibration, juddering and noisiness, and the pads exhibit non-uniform wear of the friction material and therefore a reduced service life.

US 6,269,945 and US 6,378,666 disclose brake pad Springs similar to those referred to in the preamble of claim 1.

It is therefore the aim of the present invention to provide a spring element for brake pads which is capable of holding a brake pad in its seat in a caliper for disc brakes, and also a disc brake having characteristics such as to remedy the drawbacks of the known solutions.

This aim is achieved by means of.a spring element for brake pads according to claim 1 and by means of a disc brake according to claim 14.

For better understanding of the invention and the advantages thereof, a description will be given below of some non-limiting exemplary embodiments thereof, with reference to the appended drawings, in which:
Figure 1 is a perspective view of a caliper of the disc brake according to the invention;
Figure 2 is a perspective view of the caliper of Figure 1, equipped with two brake pads;
Figure 3 is a view in longitudinal section of the caliper of Figure 2, in which view some details have been omitted;
Figure 4 is a view in longitudinal section of the caliper of Figure 2;
Figures 5 and 6 are two perspective views of a spring element for brake pads, Figure 5 representing the invention;

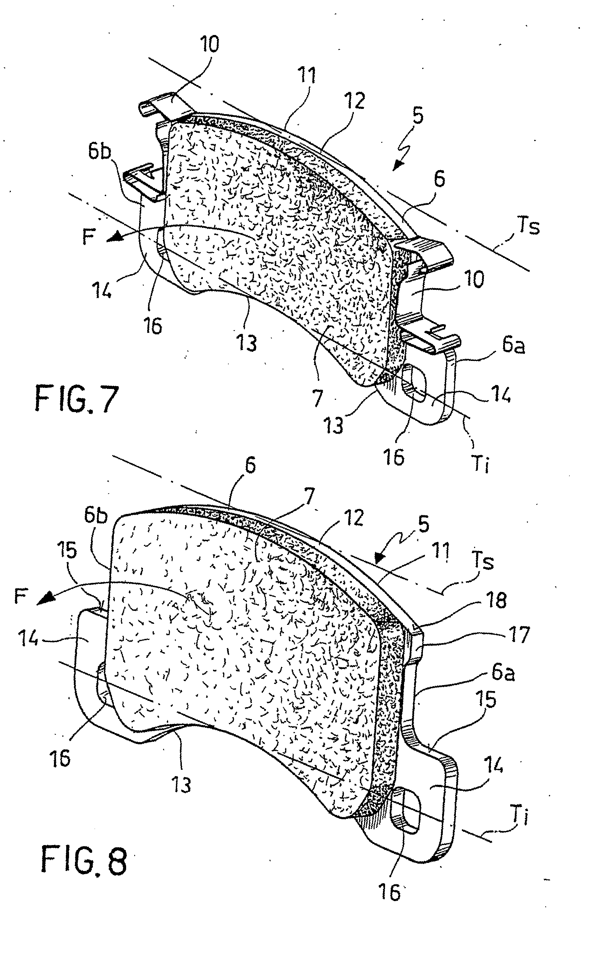

Figure 7 is a perspective view of the brake pad of the caliper in Figure 4, equipped with two spring elements for brake pads ;
Figure 8 is a perspective view of the brake pad of the caliper of Figure 3.

With reference to the drawings, a disc brake, in particular for use in motor vehicles, is indicated overall by the reference 1. In the specific case, it is a disc brake of the type with fixed caliper.

The disc brake 1 comprises a caliper 2 and a brake disc 41. The caliper 2 is secured, by means of fixing screws, to a vehicle suspension, while the brake disc 41, equipped with an annular braking band 4, is connectable to the wheel hub of the vehicle.

The caliper 2 comprises two lateral walls 3 disposed on both sides of the disc 41 and connected to each other by means of connecting members 20 which straddle the braking band 4 which, when the vehicle is in forward motion, passes through the caliper 2 in the direction of the arrow F, and in the opposite direction, designated by means of the arrow B, when the vehicle is in reverse motion.

At least two brake pads 5, consisting respectively of a plate 6, for example made of steel, having a coating of friction material 7, are each disposed on one side of the brake disc 41 at the braking band 4, and are received, so that they cannot be lost, in suitable seats 8 of the caliper 2.

The brake pads 5, displaceable in a direction perpendicular to the plane of the brake disc 41, can be acted upon by thrust means, such as, for example, one or more hydraulic cylinder/piston units 9a, 9b, 9c disposed in the caliper 2 so as to clamp, by means of the friction coating 7, a sector of the braking band 4, the surface and shape of which correspond to those of the friction coatings 7.

In order to prevent the brake pads 5 from knocking in the seats 8 while the vehicle is in motion without the brake actuated, suitable spring elements 10 for brake pads are provided which exert a resilient bias on the pads 5 to arrest them in the seats 8.

The plate 6 of each brake pad 5 is substantially flat and has a central portion 11 in the shape of a rectangle distorted in the plane in the shape of an arc. This central portion 11 has an upper edge 12 and a lower edge 13 opposed to the upper edge 12. Preferably, the upper edge 12 and lower edge 13 extend along circumferences of a circle which determine the arcuate form of the central portion 11. In other words, the upper edge 12 is substantially convex and the lower edge 13 is substantially concave.

The plate 6 or its central portion 11 further comprises two lateral edges, in particular a forward edge 6b and a rearward edge 6a opposed to the forward edge 6b, with reference to the direction of rotation F of the disc 41 corresponding to forward motion of the vehicle. In other words, in forward motion, the braking band 4, passing through the caliper 2, encounters first the rearward lateral edge 6a and then the forward lateral edge 6b of the plate 6.

Preferably, said lateral edges 6b and 6a are substantially rectilinear and parallel and, advantageously, perpendicular to a direction Ts tangential to the upper edge 12 and/or to a tangentional direction Ti of the lower edge 13 at a point halfway between the lateral edges 6a, 6b.

From the lateral edges 6a, 6b of the plate 6, near or at the lower edge 13 (that is to say the concave edge of the central portion 11), support appendages 14 protrude which extend substantially transversely, preferably perpendicularly, to the lateral edges 6a and 6b. In other words, the support appendages 14 extend parallel to the tangential direction Ts and Ti.

Advantageously, the arcuate central portion 11 forms together with the support appendages 14 an "Ω"-shaped structure.

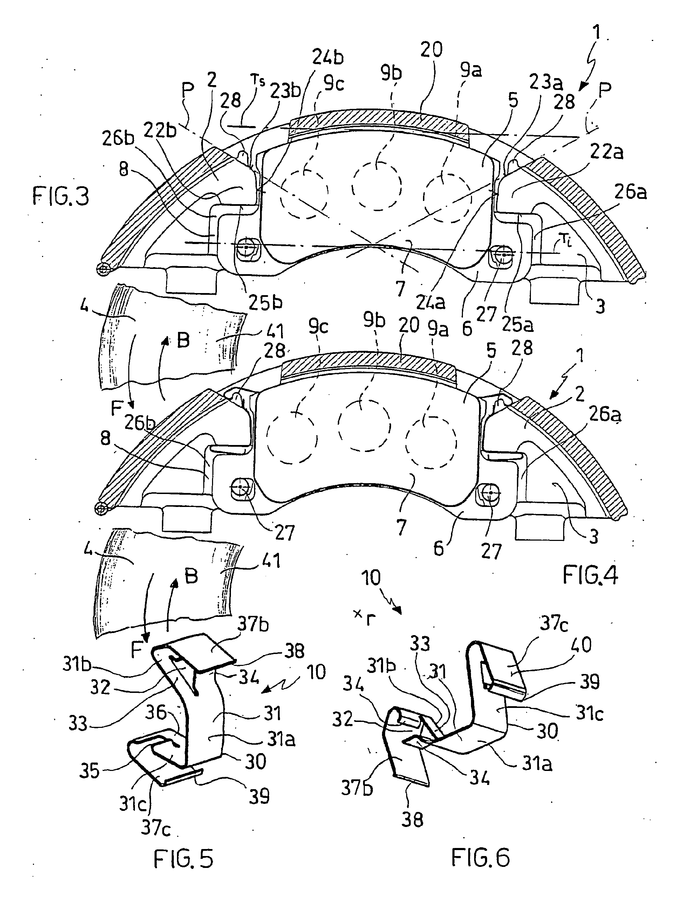

The support appendages 14 lie in the same plane as the plate 6 and are made in one piece with the latter. Advantageously, they have a substantially rectangular shape with the corners rounded and each of the appendages 14 comprises an upper surface 15 facing radially outwards with respect to an axis of rotation r of the brake disc (see Fig. 4). In other words, the upper surfaces 15 face in the same direction as the upper edge 12.

According to one embodiment, the upper surfaces 15 are substantially flat and extend in a direction parallel to the directions Ts, Ti tangential to the upper edge 12 and lower edge 13.

Each appendage 14 bounds an eye 16 disposed outside the coating of friction material 7 and the central portion 11 of the plate 6.

According to one embodiment, the eye 16 has a substantially rectangular shape with the corners rounded or chamfered. Advantageously, the eyes 16 are disposed on the tangent Ti to the lower edge 13 at the point halfway between the lateral edges 6a and 6b.

From each of the lateral edges 6a, 6b of the plate 6 there extends, at the upper edge 12, a protuberance 17 which forms a prolongation of the upper edge 12 outside the central portion 11.

The protuberance 17 comprises a bearing surface 18 facing radially outwards with respect to the axis of rotation r of the brake disc or, in other words, oriented in the same way as the upper edge 12.

Each of the two eyes 16 is intended to receive, with play, a respective pin 27 of the caliper 2, the spacing and size of the eyes 16 and of the pins 27 being selected such that the pins 27 can bear only against the walls of the eyes 16 opposed to the central portion 11 of the brake pad 5. In this way, during braking, the pad 5 is in tension and transmits the braking force always to the pin disposed on the inlet side of the brake disc 41 in the space between the pads, while the pin disposed on the outlet side of the disc effects only radial bearing with respect to the axis of rotation r of the brake disc.

The upper surfaces 15 of the support appendages 14 and the bearing surfaces 18 of the protuberances 17 constitute locating means or seats against which one or more spring elements 10 for brake pads can abut, in order to maintain the pads 5 resiliently in position.

Advantageously, the upper surfaces 15 of the appendages 14 are flat and parallel to the tangent Ts to the upper edge 12 at the point halfway between the lateral edges 6a and 6b, allowing the brake pad spring element 10 bearing against them to push the pad 5 resiliently downwards or radially towards the axis of rotation r of the brake disc 41.

The bearing surfaces 18 of the protuberances 17 are inclined with respect to the tangents Ts and Ti, so as to allow the brake pad spring elements abutting on them to exert a resilient thrust towards the central portion 11 of the pad to stabilise the latter in a circumferential direction with respect to the axis of rotation r of the brake disc 41.

Advantageously, the brake pad 5, in particular its appendages 14, are symmetrical with respect to a line substantially radial to the axis of rotation r of the brake disc 41.

The seats 8 provided in the lateral walls 3 of the caliper 1 have a shape suitable for receiving the pads 5 by means of the interposition of the brake pad spring elements 10.

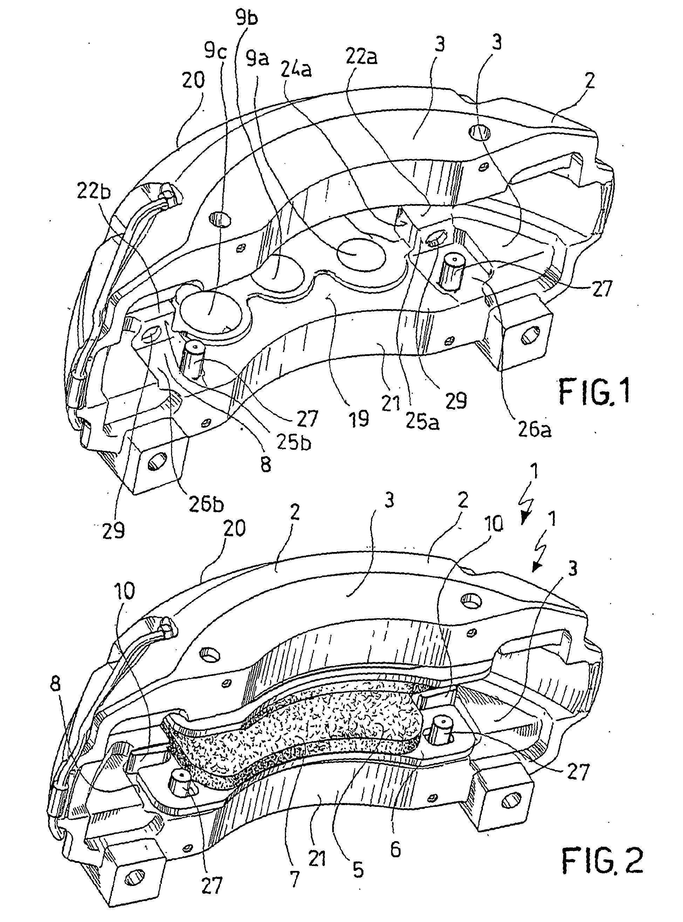

According to the embodiment shown in Figures 1, 3 and 4, the seats 8 are substantially flat and have a central space 19 in the shape of a rectangle distorted in the plane in the shape of an arc. This central space 19 is bounded at the top by a connecting member 20 which connects the two lateral walls 3 of the caliper 2, and at the bottom by a lower edge 21 of the lateral wall 3 opposed to the aforesaid connecting member 20. Preferably, at the aforesaid lower edge 21 of the lateral wall 3, the seat 8 is open towards the outside of the caliper 2 and devoid of any opposing or bearing surface which might prevent displacement of the pad 5.

Advantageously, both the connecting member 20 and the lower edge 21 extend along circumferences of a circle, determining the arcuate shape of the central space 19. Or, in other words, the connecting member 20 is substantially convex and the lower edge 21 is substantially concave, seen from outside the central space 19.

The central space 19 is laterally bounded by a forward containment wall 22b and by a rearward containment wall 22a opposed to the forward wall, still with reference to the direction of forward motion F of the disc 41. In other words, in forward motion, the braking band 4, passing through the caliper 2, encounters first the rearward containment wall 22a and then the forward containment wall 22b of the seat 8.

Preferably, each of said containment walls 22a, 22b has an upper surface 23a facing radially outwards with respect to the axis of rotation r of the brake disc 41, to which is connected a lateral surface 24a, 24b facing towards the central space 19 and a lower surface 25a, 25b facing radially inwards with respect to the axis of rotation r.

Preferably, the upper surfaces 23a, 23b of the containment walls 22a, 22b are substantially flat and oriented or inclined towards the central space 19. Advantageously, said upper surfaces 23a, 23b lie in planes P which intersect the lower edge 21 at a point halfway between the two containment walls 22a and 22b (see Fig. 3).

The lateral surfaces 24a and 24b are connected, by means of a rounded transition section, to the upper surfaces 23a, 23b.

According to the embodiment shown in Figures 3 and 4, the lateral surfaces 24a, 24b are substantially flat and facing one another.

The lateral surfaces 24a, 24b may be parallel or, as revealed by the figures, inclined in such a way that the central space 19 bounded by them widens out towards the connecting member 20, that is to say, in a radial direction with respect to the axis of rotation r of the disc 41.

To the lateral surface 24a, 24b of each containment wall 22a, 22b is connected the respective lower surface 25a, 25b which faces radially towards the axis of rotation r of the brake disc. In other words, the lower surfaces 25a, 25b are disposed on the side of the containment walls 22a, 22b opposed to the upper surfaces 23a, 23b and face in the same direction as the lower edge 21 of the lateral wall 3.

According to one embodiment, the lower surfaces 25a, 25b are substantially flat and extend in a direction parallel to the directions tangential to the connecting member 20 and to the lower edge 21 at a point halfway between the containment walls 22a, 22b.

From the central space 19 of the seat 8, at the lower edge 21, two outer spaces 26a, 26b extend which are bounded at the top by the aforesaid lower surfaces 25a, 25b of the containment walls 22a, 22b.

Advantageously, the arcuate central space 19 forms together with the outer spaces 26a, 26b an "Ω"-shaped seat.

The outer spaces 26a, 26b are provided in the lateral walls 3 in the same plane as the central spaces 19, and advantageously have a substantially rectangular shape with the corners rounded.

Within each outer space 26a, 26b is respectively disposed one of the pins 27 intended to be inserted into the eyes 16 of the brake pad 5.

The pins 27 may be made in one piece with the caliper or, preferably, are obtained separately from a suitable material and then secured to the lateral walls 3 of the caliper 2.

Advantageously, the chamfering radius of the eyes 16 is less than the radius of the cylindrical pins 27 so that the mutual bearing between the pin and (the chamfered angle of) the eye occurs at two points of contact.

According to one embodiment, the material of the plate 6 of the brake pad 5 is suitable for undergoing plastic deformation within certain limits, such as to adapt the shape of the eye 16 in the region of contact with the pin 27 exactly to the shape of the latter.

Advantageously, the longitudinal axes of the two pins 27 of each seat 8 lie approximately in the plane tangent to the lower edge 21 of the respective lateral wall 3 of the caliper 2 at a point halfway between the two containment walls 22a, 22b of the seat 8.

The containment walls 22a, 22b, besides delimiting the seats 8 for the brake pads 5, also constitute seats for the brake pad spring elements 10, which have a shape such as to be able to tighten resiliently about their upper surfaces 23a, 23b, lateral surfaces 24a, 24b and lower surfaces 25a, 25b.

From each of the two upper surfaces 23a, 23b of the containment walls 22a, 22b a stop tooth 28 protrudes, capable of engaging a suitable seat of the brake pad spring element 10 to prevent the latter from becoming detached from the containment wall 22a, 22b.

Advantageously, the stop tooth 28 is spaced from the surface of the lateral wall 3 or of the seat 8 so as to delimit between the latter and the stop tooth 28 a passage for the spring element 10.

According to the invention, each of the lower surfaces 25a, 25b of the containment walls 22a, 22b has a recess 29, preferably oval and capable of receiving a suitable protuberance or projection of the brake pad spring element 10 to provide a second point at which the spring element 10 is secured to the containment wall 22a, 22b.

The brake pad spring element 10 comprises a strip or an elongate plate 30 of resilient material, for example, spring steel, which plate 30 is bent so as to form a "C"-shaped base 31, preferably rectangular or trapezoidal or, alternatively, arcuate.

According to the embodiment shown in Figures 5 and 6, the base 31 of the brake pad spring element 10 is in the shape of a trapezium bounded along the sides and along the minor base and open along the major base.

The base 31 is preferably shaped so as to be substantially complementary to the shape of the containment wall 22a, 22b of the caliper 2 and capable of tightening resiliently about the latter.

The base 31 formed by a central section 31a which forms the minor base of the trapezium, an upper section 31b and a lower section 31c which respectively form the sides of the trapezium has, in the upper section 31b, a recess 32 capable of receiving the tooth 28 formed on the containment wall 22a, 22b of the caliper 2.

This recess 32 may be obtained by means of local deformation or removal of material of the plate 30 of the spring element 10, for example by means of punching or shearing.

According to one embodiment, in the region of the recess 32, the plate 30 of the spring element 10 has a notch or an aperture transverse to the length of the plate 30. This notch or aperture involves only a part of the width of the plate 30 so that a bridge 33 remains which ensures the structural continuity of the spring element 10 in this region. At the two opposed sides of the recess 32 (seen in the longitudinal direction of the plate 30) are formed two limbs 34 bent back in such a way as to form opposing walls capable of bearing from two opposed sides against the tooth 28 of the caliper 2, while the bridge 33 is intended to be placed in the space between the tooth 28 and the lateral wall 3 of the caliper 2.

In the lower section 31c of the base 31 a projection or protuberance 35 is formed, capable of engaging the recess 29 of the containment wall 22a, 22b of the caliper 2.

This protuberance 35 may be obtained by means of local deformation of the plate 30 of the spring element 10, for example by means of punching or shearing and bending.

According to one embodiment, in the region of the protuberance 35, the plate 30 of the spring element 10 has a notch transverse to the length of the plate 30. The notch or aperture involves only a part of the width of the plate 30 so that a bridge 36 remains which ensures the structural continuity of the spring element 10 in that region. On at least one side of the notch there is formed at least one limb bent back towards the inside of the base 31 so as to form precisely said projection 35.

From the upper section 31b and lower section 31c of the base 31 of the spring element 10 extend respective pressure sections, upper 37b and lower 37c, suitable for resiliently biasing the brake pad 5 so as to hold it in position in the seat 8 and prevent any unwanted vibration and displacement.

The pressure sections, upper 37b and lower 37c, are bent back with respect to the adjacent upper side 31b and lower side 31c of the base 31 and extend in a direction substantially opposed to these latter. In other words, the pressure sections, upper 37b and lower 37c, are oriented towards the side of the spring element 10 on which is disposed the central section 31a of the base 31, that is to say, its closed side.

The brake pad spring element 10 therefore has an overall shape similar to the letter "ζ" (lower case Greek letter zeta) or to its mirror image.

According to a further embodiment, the brake pad spring element 10 has an overall shape similar to the letter "Σ" (upper case Greek letter *Sigma*) or to its mirror image.

Each of the pressure sections 37b, 37c forms together with the adjacent section 31b, 31c of the base 31 a resilient arc the elastic deformation of which, with the spring element 10 mounted, forms the resilient bias acting on the brake pad 5.

An edge 38 of the free end of the upper pressure section 37b, preferably bent in a direction opposed to the base 31, constitutes a bearing surface for the bearing of the upper pressure section 37b on the bearing surface 18 of the protuberances 17 of the brake pad 5.

An edge 39 of the free end of the lower pressure section 37c, preferably bent towards the base 31, constitutes a spacing device capable of preventing said lower pressure section 37c from coming too close to the lower side 31c of the base 31, while an outer surface 40 of the lower pressure section 37c, facing away from the base 31, constitutes a bearing surface for the resilient bearing of the lower pressure section 37c on the upper surface 15 of the appendages 14 of the brake pad 5.

As revealed by the figures, the two brake pad spring elements 10 associated with each seat 8 have a structure and shape which is chiral or, in other words, mirror-image but not superposable.

A description will now be given of the mounting of the brake pad spring elements and of the brake pads in the caliper, and of the operation of a disc brake according to the invention equipped with a brake pad spring element according to the invention.

The brake pad spring elements 10 are slipped from inside the seat 8 for the brake pad, on the containment walls 22a, 22b. During the insertion of the spring element 10, the upper section 31b of the base 31 slides on the upper surface 23a, 23b with the tooth 28 of the containment wall 22a, 22b as far as the point where the tooth 28 engages the recess 32 of the spring element 10. The lower section 31c of the base 31 of the spring element, on the other hand, slides on the lower surface 25a of the containment wall 22a, 22b as far as the point where the protuberance 35 of the spring element 10 snaps into the recess 29 of the containment wall.

The bases 31 of the spring elements resiliently surround the containment walls 22a, 22b and the engagement between the protuberance 35 and the recess 29, and also between the recess 32 and the tooth 28, ensures stable and secure fixing of the spring elements.

After the mounting of the spring elements 10, the brake pads 5 are mounted. These are positioned such that the two eyes 16 are aligned with the pins 27 of the caliper and such that the upper surfaces 15 of the appendages 14 and the upper surfaces 18 of the protuberances 17 of the brake pad 5 rest from below against the edges 38 and the outer surfaces 40 of the spring elements 10. Positioned thus, the brake pad is displaced upwards, resiliently deforming the spring elements 10, and pushed axially on the pins 27 of the caliper 2.

Owing to the reaction force of the deformed spring element, the edge 38 of the upper pressure section 37b stresses the upper surface 18 of the protuberance 17 of the brake pad 5, thus resiliently opposing the movements of the brake pad in a circumferential direction with respect to the axis of rotation r of the brake disc. The outer surface 40 of the lower pressure section 37c resiliently stresses the upper surface 15 of the appendage 14 of the brake pad, pushing it downwards or radially towards the axis of rotation r so that the pins 27 come into bearing contact against the upper walls of the eyes 16 of the brake pad.

In this way the brake pad is held in the seat of the caliper in a secure manner, free of vibration.

While the vehicle is in motion without the brakes actuated, the brake pads 5, housed in the seats 8 of the caliper 2, are maintained, via the spring elements 10, at a certain distance from each other and from the braking band 4.

Since the dimension of the eyes 16 is greater than the diameter of the pins 27 and the spring elements 10 maintain the upper walls of the eyes 16 in contact with the pins 27, the brake pads 5 are displaceable, within certain limits, in a direction tangential to the axis of rotation r of the brake disc. This tangential movement is, however, resiliently opposed by the upper pressure sections 37b of the spring elements 10.

The brake pad 5 is therefore connected to the seat 8 of the caliper 2 only by means of the contact between the two pins 27 and the eyes 16 and maintained in position by the spring elements 10.

As a consequence, while the vehicle is in motion without the brakes actuated and during light braking, the brake pad is unusually quiet and not subject to vibration and juddering.

During a braking operation, the brake pads 5 are pushed against the braking band 4 in rotation and grip the latter by friction. The braking band 4 in its turn entrains the brake pads 5 in the direction circumferential to the axis of rotation r in such a way that the eye 16 disposed on the rearward side of the brake pad (in other words: on the inlet side of the disc in the space between the brake pads) abuts on the respective pin 27, arresting the brake pad 5 which is pulled completely.

Since the spring elements push the brake pad downwards and the eyes are disposed in a lower portion of the brake pad, the upper walls of the eyes always abut on the pins, and the pin which transmits the braking force assumes a position precisely in the angle between the upper wall and the outer wall of the eye opposed to the central portion of the brake pad.

Owing to the difference between the chamfering radius of the eye and the radius of the pin, two lines of contact are formed between the pin and the eye, which may become, owing to plastic deformation of the eye, a contact surface having substantially the shape of the outer surface of the pin.

During a braking operation, the brake pad thus supported within the caliper is free of vibration and the friction coating 7 is subjected to very uniform wear.

An expert in the field, for the purpose of satisfying contingent and specific requirements, may of course apply further modifications and variants to the brake pad spring element and to the disc brake according to the present invention, all, however, contained within the scope of protection of the invention as defined by the following claims.

## Claims

1. A brake pad spring element (10) that can be associated with a caliper (2) of a disc brake (1) to hold one or more brake pads (5) in suitable seats (8) of the caliper (2), wherein said spring element (10) comprises an elongate plate (30) of resilient material, which plate (30) is bent in such a way as to form a "C"-shaped base (31), said base (31) being capable of tightening resiliently about a containment wall (22a, 22b) of said seat (8) of the caliper (2).
**characterized in that** a lower section (31c) of said base (31) has a protuberance (35) capable of engaging a recess (29) provided in the containment wall (22a, 22b) of the caliper (2) and
an upper section (31b) of said base (31) has a recess (32) capable of receiving a tooth (28) formed on the containment wall (22a, 22b) of the caliper (2).

2. A brake pad spring element (10) according to claim 1, wherein said base (31) has the shape of a trapezium open along its major base.

3. A brake pad spring element (10) according to claim 1 or 2, wherein said recess (32) is formed by a notch transverse to the length of the plate (30) which involves only a part of the width of the plate (30) so that a bridge (33) remains which ensures the structural continuity of the spring element (10) in the region of the recess (32).

4. A brake pad spring element (10) according to claim 3, wherein on the two opposed sides of the recess (32) two limbs (34) are formed which are bent back so as to constitute opposing walls capable of bearing from two opposed sides against said tooth (28) of the caliper (2), while the bridge (33) can be positioned in a space formed between the tooth (28) and a lateral wall (3) of the caliper (2).

5. A brake pad spring element (10) according to claims any one of the preceding, wherein the protuberance (35) of the spring element (10) has been obtained by means of local deformation of the plate (30), for example by means of punching or by means of shearing and bending.

6. A brake pad spring element (10) according to claim 5, wherein the protuberance (35) is formed by a limb of the spring element (10) bent back towards the inside of the base (31).

7. A brake pad spring element (10) according to any one of the preceding claims, wherein from the upper section (31b) and lower section (31c) of the base (31) of the spring element (10) extend respective pressure sections, upper (37b) and lower (37c), capable of biasing said brake pad (5) resiliently in such a way as to hold it in its position in the seat (8).

8. A brake pad spring element (10) according to claim 7, wherein the upper pressure section (37b) and lower pressure section (37c) are bent back with respect to the adjacent upper side (31b) and lower side (31c) of the base (31) and extend in a direction substantially opposed to the latter.

9. A brake pad spring element (10) according to claim 8, wherein the upper pressure section (37b) and lower pressure section (37c) are oriented towards the closed side of the base (31).

10. A brake pad spring element (10) according to any one of claims 7 to 9, wherein each pressure section (37b, 37c) forms together with the adjacent lateral section (31b, 31c) of the base (31) a resilient arc, the elastic deformation of which is capable of forming, when the spring element (10) is mounted, a resilient bias acting on the brake pad (5).

11. A brake pad spring element (10) according to any one of the preceding claims, having an overall shape similar to the letter "ζ" (lower case Greek letter zeta) or to its mirror image.

12. A brake pad spring element (10) according to any one of the preceding claims, having an overall shape similar to the letter "Σ" (upper case Greek letter Sigma) or to its mirror image.

13. A set of two brake pad spring elements (10) according to any one of the preceding claims, said set being capable of being associated with a seat (8) for brake pads of a caliper (2) for a disc brake (1), wherein the two brake pad spring elements (10) have structure and shape that is chiral, that is to say, mirror-image but not superposable.

14. A disc brake (1) comprising at least one brake pad spring element (10) according to any one of the preceding claims.

## Patentansprüche

1. Bremsbelag-Federelement (10), das einem Bremssattel (2) einer Scheibenbremse (1) zugeordnet werden kann, um einen oder mehrere Bremsbeläge (5) in geeigneten Sitzen (8) des Bremssattels (2) zu halten, wobei das Federelement (10) eine längliche Platte (30) aus elastischem Material umfasst, wobei die Platte (30) in einer solchen Weise gebogen ist, dass eine "C"-förmige Basis (31) gebildet wird, wobei die Basis (31) in der Lage ist, sich mit einer Federspannung um eine Begrenzungswand (22a, 22b) des Sitzes (8) des Bremssattels (2) herum zu legen,
**dadurch gekennzeichnet, dass** eine untere Sektion (31c) der Basis (31) einen Vorsprung (35) aufweist, der in eine Ausnehmung (29) einzugreifen vermag, der in der Begrenzungswand (22a, 22b) des Bremssattels (2) ausgebildet ist, und
dass eine obere Sektion (31b) der Basis (31) eine Ausnehmung (32) aufweist, die einen Zahn (28) aufzunehmen vermag, der an der Begrenzungswand (22a, 22b) des Bremssattels (2) ausgebildet ist.

2. Bremsbelag-Federelement (10) gemäß Anspruch 1, wobei die Basis (31) die Form eines Trapezes aufweist, das entlang seiner großen Basis offen ist.

3. Bremsbelag-Federelement (10) gemäß Anspruch 1 oder 2, wobei die Ausnehmung (32) durch eine Aussparung gebildet wird, die quer zur Länge der Platte (30) verläuft und sich nur über einen Teil der Breite der Platte (30) erstreckt, so dass eine Brücke (33) übrig bleibt, welche die strukturelle Kontinuität des Federelements (10) in der Region der Ausnehmung (32) gewährleistet.

4. Bremsbelag-Federelement (10) gemäß Anspruch 3, wobei auf den zwei gegenüberliegenden Seiten der Ausnehmung (32) zwei Glieder (34) ausgebildet sind, die so zurückgebogen sind, dass sie gegenüberliegende Wände darstellen, die in der Lage sind, von zwei gegenüberliegenden Seiten an dem Zahn (28) des Bremssattels (2) anzuliegen, während die Brücke (33) in einem Raum angeordnet werden kann, der zwischen dem Zahn (28) und einer seitlichen Wand (3) des Bremssattels (2) ausgebildet ist.

5. Bremsbelag-Federelement (10) gemäß einem der vorangehenden Ansprüche, wobei der Vorsprung (35) des Federelements (10) durch örtliche Verformung der Platte (30) erhalten wurde, zum Beispiel durch Stanzen oder durch Scheren und Biegen.

6. Bremsbelag-Federelement (10) gemäß Anspruch 5, wobei der Vorsprung (35) durch ein Glied des Federelements (10) gebildet wird, das in Richtung der Innenseite der Basis (31) zurückgebogen ist.

7. Bremsbelag-Federelement (10) gemäß einem der vorangehenden Ansprüche, wobei sich von der oberen Sektion (31b) und der unteren Sektion (31c) der Basis (31) des Federelements (10) jeweilige Drucksektionen, eine obere (37b) und eine untere (37c), erstrecken, die in der Lage sind, den Bremsbelag (5) elastisch in einer solchen Weise vorzuspannen, dass er in seiner Position in dem Sitz (8) gehalten wird.

8. Bremsbelag-Federelement (10) gemäß Anspruch 7, wobei die obere Drucksektion (37b) und die untere Drucksektion (37c) relativ zu der benachbarten Oberseite (31b) bzw. der benachbarten Unterseite (31c) der Basis (31) zurückgebogen sind und sich in einer Richtung erstrecken, die der benachbarten Oberseite (31b) bzw. der benachbarten Unterseite (31c) der Basis (31) im Wesentlichen entgegengesetzt ist.

9. Bremsbelag-Federelement (10) gemäß Anspruch 8, wobei die obere Drucksektion (37b) und die untere Drucksektion (37c) in Richtung der geschlossenen Seite der Basis (31) weisen.

10. Bremsbelag-Federelement (10) gemäß einem der Ansprüche 7 bis 9, wobei jede Drucksektion (37b, 37c) zusammen mit der benachbarten seitlichen Sektion (31b, 31c) der Basis (31) einen elastischen Bogen bildet, dessen elastische Verformung in der Lage ist, wenn das Federelement (10) montiert ist, eine elastische Vorspannung zu bilden, die auf den Bremsbelag (5) wirkt.

11. Bremsbelag-Federelement (10) gemäß einem der vorangehenden Ansprüche, das eine Gesamtform aufweist, die dem Buchstaben "ζ" (dem griechischen Kleinbuchstaben zeta) oder seinem Spiegelbild ähnelt.

12. Bremsbelag-Federelement (10) gemäß einem der vorangehenden Ansprüche, das eine Gesamtform aufweist, die dem Buchstaben "Σ" (dem griechischen Großbuchstaben Sigma) oder seinem Spiegelbild ähnelt.

13. Satz aus zwei Bremsbelag-Federelementen (10) gemäß einem der vorangehenden Ansprüche, wobei dieser Satz einem Sitz (8) für Bremsbeläge eines Bremssattels (2) für eine Scheibenbremse (1) zugeordnet werden kann, wobei die zwei Bremsbelag-Federelemente (10) eine Struktur und eine Form aufweisen, die chiral ist, das heißt spiegelbildlich, aber nicht übereinanderlegbar.

14. Scheibenbremse (1), die mindestens ein Bremsbelag-Federelement (10) gemäß einem der vorangehenden Ansprüche umfasst.

## Revendications

1. Elément de ressort de plaquette de frein (10) qui peut être associé à un étrier (2) d'un frein à disque (1) pour maintenir une ou plusieurs plaquettes de frein (5) dans des sièges (8) appropriés de l'étrier (2), dans lequel ledit élément de ressort (10) comprend une plaque (30) allongée en un matériau élastique, laquelle plaque (30) est pliée de manière à former une base (31) en forme de « C », ladite base (31) étant capable de se serrer élastiquement autour d'une paroi de confinement (22a, 22b) dudit siège (8) de l'étrier (2),
**caractérisé en ce que**
une section inférieure (31c) de ladite base (31) comporte une protubérance (35) capable de venir en prise avec un évidement (29) prévu dans la paroi de confinement (22a, 22b) de l'étrier (2), et
une section supérieure (31b) de ladite base (31) comporte un évidement (32) capable de recevoir une dent (28) formée sur la paroi de confinement (22a, 22b) de l'étrier (2).

2. Elément de ressort de plaquette de frein (10) selon la revendication 1, dans lequel ladite base (31) a la forme d'un trapèze ouvert le long de sa base principale.

3. Elément de ressort de plaquette de frein (10) selon la revendication 1 ou 2, dans lequel ledit évidement (32) est formé par une encoche transversale à la longueur de la plaque (30) qui n'implique qu'une partie de la largeur de la plaque (30) de sorte qu'un pont (33) subsiste, lequel assure la continuité structurelle de l'élément de ressort (10) dans la région de l'évidement (32).

4. Elément de ressort de plaquette de frein (10) selon la revendication 3, dans lequel, des deux côtés opposés de l'évidement (32), deux bras (34) sont formés, lesquels sont repliés de manière à constituer des parois opposées capables de s'appuyer à partir de deux côtés opposés contre ladite dent (28) de l'étrier (2), tandis que le pont (33) peut être positionné dans un espace formé entre la dent (28) et une paroi latérale (3) de l'étrier (2).

5. Elément de ressort de plaquette de frein (10) selon l'une quelconque des revendications précédentes, dans lequel la protubérance (35) de l'élément de ressort (10) a été obtenue au moyen d'une déformation locale de la plaque (30), par exemple au moyen d'un poinçonnage ou au moyen d'un cisaillement et d'un pliage.

6. Elément de ressort de plaquette de frein (10) selon la revendication 5, dans lequel la protubérance (35) est formée par un bras de l'élément de ressort (10) replié vers l'intérieur de la base (31).

7. Elément de ressort de plaquette de frein (10) selon l'une quelconque des revendications précédentes, dans lequel des sections de pression respectives, supérieure (37b) et inférieure (37c), capables de solliciter ladite plaquette de frein (5) élastiquement de manière à la maintenir dans sa position dans le siège (8) s'étendent de la section supérieure (31b) et de la section inférieure (31c) de la base (31) de l'élément de ressort (10).

8. Elément de ressort de plaquette de frein (10) selon la revendication 7, dans lequel la section de pression supérieure (37b) et la section de pression inférieure (37c) sont repliées par rapport au côté supérieur (31b) et au côté inférieur (31c) adjacents de la base (31) et s'étendent dans une direction sensiblement opposée à cette dernière.

9. Elément de ressort de plaquette de frein (10) selon la revendication 8, dans lequel la section de pression supérieure (37b) et la section de pression inférieure (37c) sont orientées vers le côté fermé de la base (31).

10. Elément de ressort de plaquette de frein (10) selon l'une quelconque des revendications 7 à 9, dans lequel chaque section de pression (37b, 37c) forme avec la section latérale adjacente (31b, 31c) de la base (31) un arc élastique, dont la déformation élastique est capable de former, lorsque l'élément de ressort (10) est monté, une sollicitation élastique agissant sur la plaquette de frein (5).

11. Elément de ressort de plaquette de frein (10) selon l'une quelconque des revendications précédentes ayant une forme globale similaire à la lettre « ξ » (lettre grecque *zeta* minuscule) ou à son image inversée.

12. Elément de ressort de plaquette de frein (10) selon l'une quelconque des revendications précédentes ayant une forme globale similaire à la lettre « Σ » (lettre grecque *Sigma* majuscule) ou à son image inversée.

13. Ensemble de deux éléments de ressort de plaquette de frein (10) selon l'une quelconque des revendications précédentes, ledit ensemble étant capable d'être associé à un siège (8) pour les plaquettes de frein d'un étrier (2) pour un frein à disque (1), dans lequel les deux éléments de ressort de plaquette de frein (10) ont une structure et une forme qui sont chirales, c'est-à-dire, images miroir mais pas superposables.

14. Frein à disque (1) comprenant au moins un élément de ressort de plaquette de frein (10) selon l'une quelconque des revendications précédentes.
